# EUROPEAN PATENT APPLICATION

(11) **EP 3 893 422 A1**
(43) Date of publication of application: **13.10.2021**
(21) Application number: 20169127.6
(22) Date of filing: 09.04.2020
(51) Int. Cl.: H04L 5/00

(54) **COMMUNICATION APPARATUS AND BASE STATION**

(71) Applicant: Panasonic Intellectual Property Corporation of America, Torrance, CA 90503 (US)
(72) Inventor: LI, Hongchao, 63225 Langen (DE); SUZUKI, Hidetoshi, Osaka-shi,, Osaka 540-6207 (JP); KUANG, Quan, 63225 Langen (DE)
(74) Representative: Grünecker Patent- und Rechtsanwälte PartG mbB

(57) **Abstract**

Provided are a communication apparatus and a base station for use in wireless communication, a method for a communication apparatus, and a method for a base station. The communication apparatus comprises a communication apparatus for use in wireless communication comprising a transceiver which, in operation, receives system information indicating a reference signal, RS, configuration and circuitry which, in operation, determines the RS configuration based on the received system information, wherein the transceiver, in operation, assumes RS available in accordance with the determined RS configuration.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

One non-limiting and exemplary embodiment facilitates efficient handling of reference signals.

In an embodiment, the techniques disclosed herein feature a communication apparatus for use in wireless communication comprising a transceiver which, in operation, receives system information indicating a reference signal, RS, configuration and circuitry which, in operation, determines the RS configuration based on the received system information, wherein the transceiver, in operation, assumes RS available in accordance with the determined RS configuration.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing which shows functional split between NG-RAN and 5GC,
- **Fig. 3**: is a sequence diagram for RRC connection setup/reconfiguration procedures,
- **Fig. 4**: is a schematic drawing showing usage scenarios of Enhanced mobile broadband (eMBB), Massive Machine Type Communications (mMTC) and Ultra Reliable and Low Latency Communications (URLLC),
- **Fig. 5**: is a block diagram showing an exemplary 5G system architecture for a non-roaming scenario,
- **Fig. 6**: is a graph showing an exemplary relationship of DRX cycle periodicity, SSB periodicity, and paging occasions with the wake-up behavior if an idle UE;
- **Fig. 7**: is a graph showing an exemplary relationship of DRX cycle periodicity, SSB periodicity, and paging occasions with the wake-up behavior if an idle UE;
- **Fig. 8**: is a graph showing an exemplary relationship between SSBs and paging occasions in multi-beam operation;
- **Fig. 9**: is a block diagram showing a base station and a communication apparatus;
- **Fig. 10**: is a block diagram showing communication apparatus circuitry;
- **Fig. 11**: is a block diagram showing base station circuitry;
- **Fig. 12**: is a flow chart showing a method for a communication apparatus;
- **Fig. 13**: is a flow chart showing a method for a base station;
- **Fig. 14**: is a flow chart showing a method for a communication apparatus;
- **Fig. 15**: is a flow chart showing a method for a communication apparatus.

### DETAILED DESCRIPTION

### 5G NR system architecture and protocol stacks

3GPP has been working at the next release for the 5^{th} generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

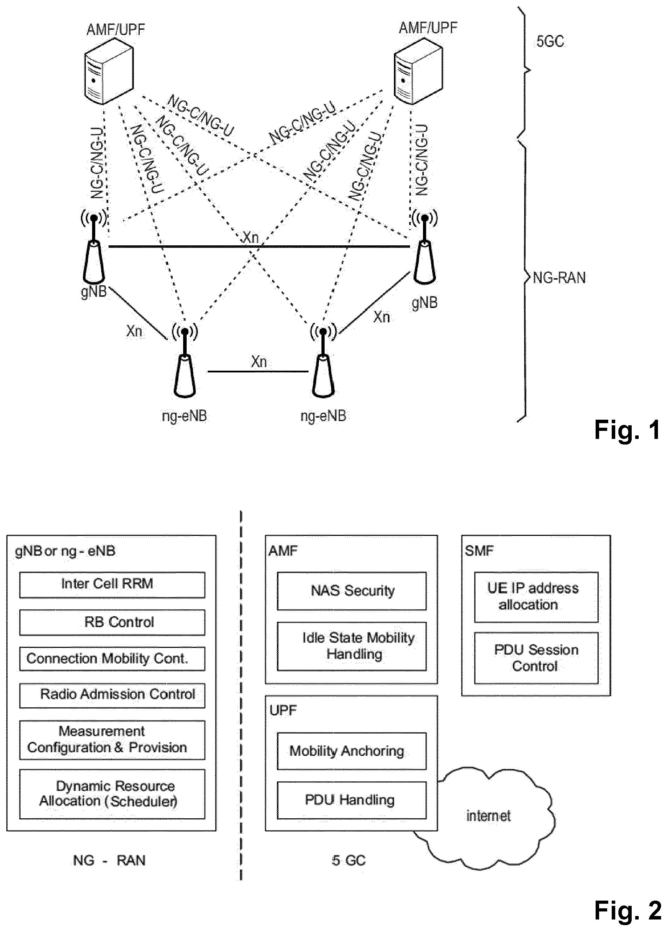

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

### 5G NR functional split between NG-RAN and 5GC

**Fig. 2** illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signaling termination;
- NAS signaling security;
- Access Stratum, AS, Security control;
- Inter Core Network, CN, node signaling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

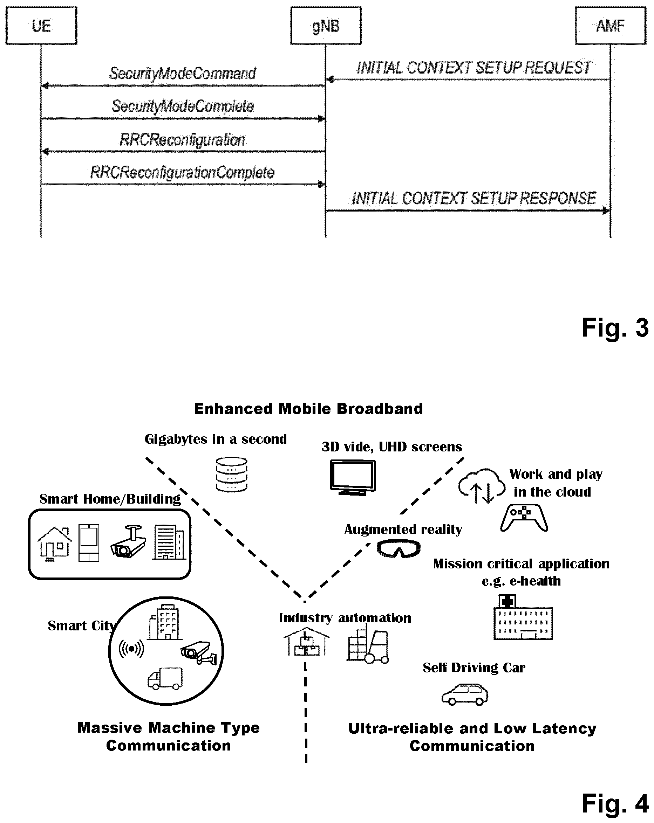

**Fig. 3** illustrates some interactions between a UE, gNB, and AMF (an 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

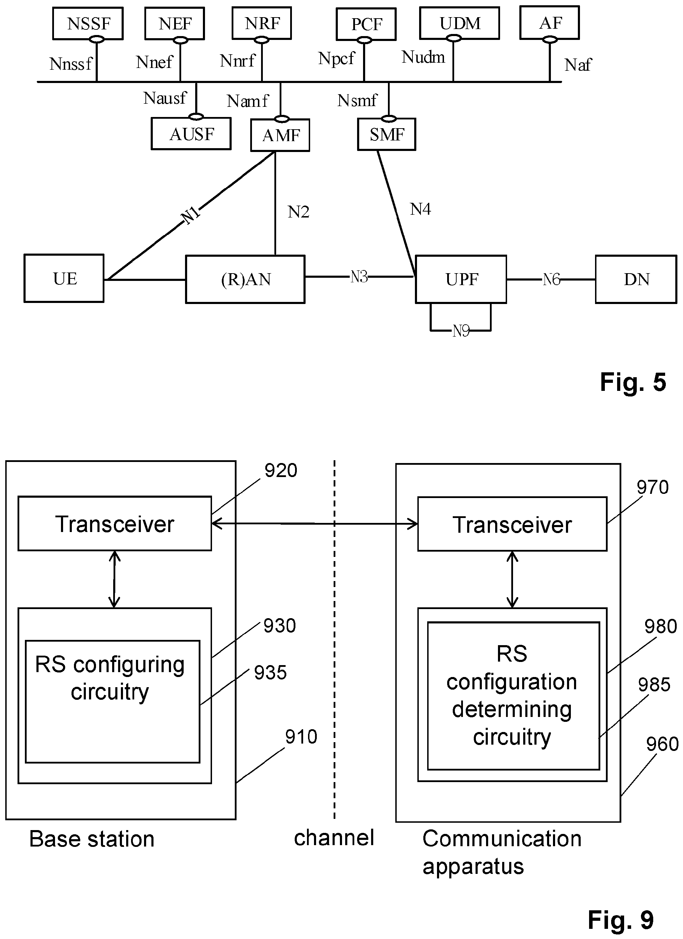

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

A terminal is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay.

A base station is a network node or scheduling node, e.g. forming a part of the network for providing services to terminals. A base station is a network node, which provides wireless access to terminals.

### RRC states

In wireless communication systems including NR, a device or communication apparatus (e.g. UE) can be in different states depending on traffic activity. In NR, a device can be in one of three RRC states, RRC_IDLE, RRC_CONNECTED, and RRC_INACTIVE. The first two RRC states, RRC_IDLE and RRC_CONNECTED, are similar to the counterparts in LTE, while RRC_INACTIVE is a new state introduced in NR and not present in the original LTE design. There are also core network states, CN_IDLE and CN_CONNECTED, depending on whether the device has established a connection with the core network or not.

In RRC_IDLE, there is no RRC context - that is, the parameters necessary for communication between the device and the network - in the radio-access network and the device does not belong to a specific cell. From a core network perspective, the device is in the CN_IDLE state. No data transfer may take place as the device sleeps most of the time to reduce battery consumption. In the downlink, devices in idle state periodically wake up to receive paging messages, if any, from the network. Mobility is handled by the device through cell reselection. Uplink synchronization is not maintained and hence the only uplink transmission activity that may take place is random access, e.g. to move to a connected state. As part of moving to a connected state, the RRC context is established in both the device and the network.

In RRC_CONNECTED, the RRC context is established and all parameters necessary for communication between the device and the radio-access network are known to both entities. From a core network perspective, the device is in the CN_CONNECTED state. The cell to which the device belongs is known and an identity of the device, the Cell Radio-Network Temporary Identifier (C-RNTI), used for signaling purposes between the device and the network, has been configured. The connected state is intended for data transfer to/from the device, but discontinuous reception (DRX) can be configured to reduce device power consumption. Since there is an RRC context established in the gNB in the connected state, leaving DRX and starting to receive/transmit data is relatively fast as no connection setup with its associated signaling is needed. Mobility is managed by the radio-access network, that is, the device provides neighboring-cell measurements to the network which commands the device to perform a handover when relevant. Uplink time alignment may or may not exist but need to be established using random access and maintained for data transmission to take place.

In LTE, only idle and connected states are supported. A common case in practice is to use the idle state as the primary sleep state to reduce the device power consumption. However, as frequent transmission of small packets is common for many smartphone applications, the result is a significant amount of idle-to-active transitions in the core network. These transitions come at a cost in terms of signaling load and associated delays. Therefore, to reduce the signaling load and in general reduce the latency, a third state is defined in NR, the RRC_INACTIVE state.

In RRC_INACTIVE, the RRC context is kept in both the device and the gNB. The core network connection is also kept, that is, the device is in CN_CONNECTED from a core network perspective. Hence, transition to connected state for data transfer is fast. No core network signaling is needed. The RRC context is already in place in the network and idle-to-active transitions can be handled in the radio-access network. At the same time, the device is allowed to sleep in a similar way as in the idle state and mobility is handled through cell reselection, that is, without involvement of the network. Accordingly, the mobility of the communication apparatus or device is device controlled rather than network controlled, and the communication apparatus is capable of contacting the network through random access. Thus, RRC_INACTIVE can be seen as a mix of the idle and connected states (for further details, see E. Dahlman, et al., 5GNR: The Next Generation Wireless Access Technology, 1st Edition, sections 6.5.1 to 6.5.3).

In some wireless communication systems, including NR or NR-like systems such as NR Release 15/16, a resource or resources, e.g. in time and frequency domain, for Tracking Reference Signals (TRS) and/or CSI-RS (Channel State Information Reference Signals), may be configured per UE with RRC parameters for sequence generation, resource mapping, and/or transmission timing (possibly including locations and/or a density in time domain). With such RRC configuration per UE, the RS can be transmitted to a configured UE (or a group of configured UEs) on demand, which is different from systems including some LTE systems where the CSI-RS are transmitted according to fixed parameters, independent of a current demand of UEs.

In some systems such as NR (e.g. Rel. 15/16), a TRS/CSI resource is configured for a UE to be utilized in measurements, e.g. for channel state estimation, time tracking, frequency tracking, and/or beam tracking, by the UE in RRC_CONNECTED mode. For UEs in other modes, RRC_IDLE and RRC_INACTIVE, such measurements rely on the Synchronization Signal Block (SSB).

Furthermore, some systems, such as NR Rel. 16 and later releases, may apply a relaxation of Radio Resource Management, RRM, measurement, in order to facilitate UE power saving. For instance, A UE may be allowed to provide RRM reports less frequently.

On the one hand, power saving considerations for NR and similar systems (e.g. NR Release 17), may address power saving for UEs in idle and inactive mode (RRC_IDLE and RRC_INACTIVE), wherein system performance is considered.

In particular, paging modification(s) may be studied and specified to reduce unnecessary monitoring and/or reception paging. Such modifications may be subject to avoiding impact on legacy UEs.

Further, regarding power saving in idle and inactive states, potential TRS/CSI occasions available in connected mode may be made available to idle/inactive mode UEs while minimizing system overhead impact.

On the other hand, the power saving considerations may also address power saving techniques for connected-mode UEs, subject to minimized system performance impact.

This may include studying and specifying extensions to power saving adaptation, possibly including adaptation techniques from NR Release 16, including reduction of PDCCH monitoring when DRX (Discontinuous Reception) for connected UEs (C-DRX) is configured. It is noted that for power saving in NR Release 17, power saving solutions available from Releases 15 and 16 should be supported by the UE evaluated and properly utilized.

The studies for connected-mode power saving may further address the impact of relaxing UE measurements for Radio Link Monitoring (RLM) and/or Beam Failure Detection (BFD), e.g. for low mobility UEs with a short DRX periodicity or DRX cycle.

As mentioned above, power saving techniques for the idle and inactive modes may include reducing unnecessary paging reception, wherein paging reception is meant to include PDCCH monitoring (e.g. for a paging DCI) and possible PDSCH reception (e.g. for obtaining a paging message), all of which contributes to a UE's power consumption. For instance, a periodicity of paging reception (e.g. an interval between paging occasions corresponding to an idle mode or inactive mode DRX cycle periodicity) may be made longer. From a UE point of view, a longer paging reception periodicity means a longer sleeping time to save power. However, a longer sleeping time may bring a challenge for time and frequency synchronization tracking (or "time/frequency tracking") and beam tracking.

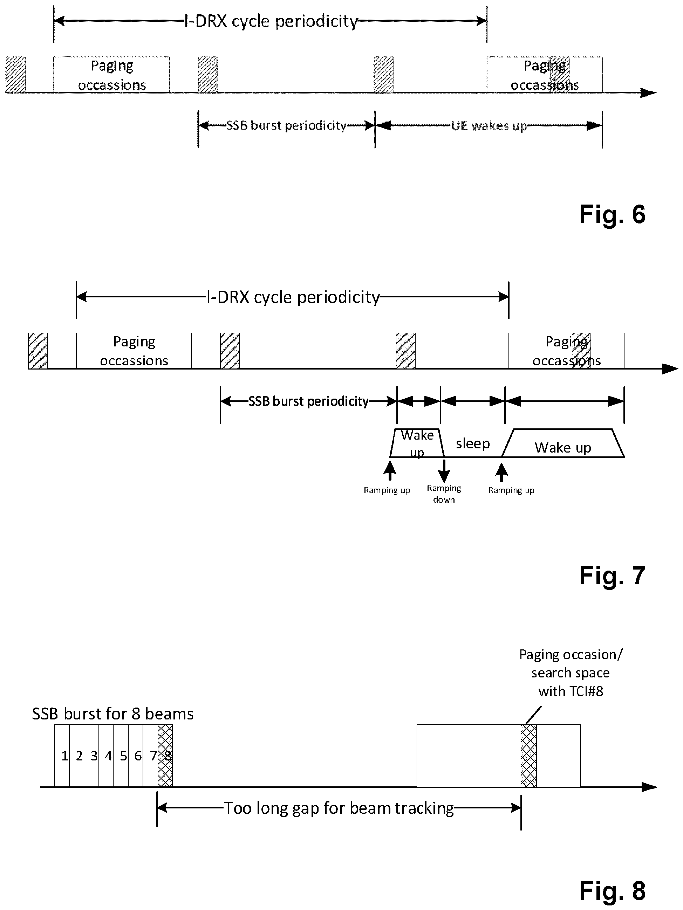

As mentioned above, in the design of some systems such as NR Release 15/16, a UE in IDLE/INACTIVE mode relies on the SSB for time and frequency tracking. However, when the DRX cycle is long in idle mode and inactive mode, the UE may need to wake up according to an SSB transmission timing to maintain time and frequency synchronization. For instance, when SSB and paging occasions are not close, the UE may choose to wake up for a longer time interval, as shown in **Fig. 6****,** to cover both. This may lead to an increase in power consumption. However, the UE may also wake up first for the SSB, then go to sleep again, and then wake up again for the paging reception, as shown in **Fig. 7****.** This leads to additional power ramping efforts, which may be associated with more power consumption as well. Further, for beam-sweeping operation, assuming that a UE is in beam #K, the distance between the SSB with index K and the Kth PDCCH (or paging occasion or paging search space with TCI (Transmission Configuration) Indicator #K may be large), as exemplified in **Fig. 8****,** which may degrade the paging reception performance. For instance, the paging reception performance may be degraded by weak channel correlation between the SSB and paging due to the long interval in between, UE mobility, or frequency selective fading.

The techniques provided by the present disclosure include a modified configuration of TRS/CSI-RS, which may facilitate time/frequency domain tracking as well as reducing power consumption for time/frequency domain tracking and/or paging monitoring.

Provided is a communication apparatus 960 for use in wireless communication, which is shown in **Fig. 9****.** The communication apparatus 960 comprises a transceiver 970 and circuitry 980, e.g. processing circuitry.

In some exemplary embodiments, the transceiver 970 of the communication apparatus (or "UE transceiver", for short), in operation, receives system information indicating a reference signal (RS) configuration. The circuitry 980 of the communication apparatus (or "UE circuitry"), in operation, determines the RS configuration based on the received system information. The UE transceiver 970, in operation, assumes the RS available in accordance with the determined RS configuration.

For instance, the communication apparatus 960 is a user terminal or user equipment (UE) in a wireless or cellular communication system such as 3GPP NR, which communicates with a base station 910 and other UEs via a wireless channel. The communication apparatus is referred to in this disclosure as "UE" without limiting the disclosure to any particular wireless communication system.

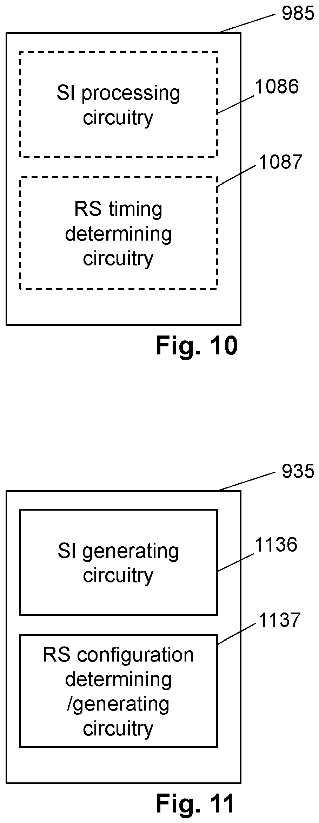

For instance, the UE circuitry 980 comprises RS configuration determining circuitry 985. In accordance with this disclosure, exemplary RS configuration determining circuitry of the communication apparatus 960, which is shown in **Fig. 10****,** may include at least one of SI (system information) processing circuitry 1086 and RS timing determining circuitry 1087.

Further provided, and also shown in **Fig. 9****,** is a base station 910, which comprises a transceiver 920 and circuitry 930 (e.g. processing circuitry).

In some exemplary embodiments, the circuitry 930 of the base station (or "base station circuitry"), in operation, determines a RS configuration and generates system information including the RS configuration. The transceiver 920 of the base station 910 (or "base station transceiver"), in operation, transmits the system information. The base station transceiver 920 transmits RS in accordance with the determined RS configuration.

The base station 910 communicates with one or more UEs over a wireless channel in a wireless or cellular communication system, e.g. 3GPP NR. For instance, the base station is a network node or a scheduling node or apparatus, such as a gNodeB (gNB). For instance, the base station serves a cell in the wireless or cellular network.

For instance, the base station circuitry 930 includes RS configuring circuitry 935. Exemplary SI generating circuitry 935 includes RS configuration determining circuitry or RS configuration generating circuitry 1137 and system information (SI) generating circuitry 1136.

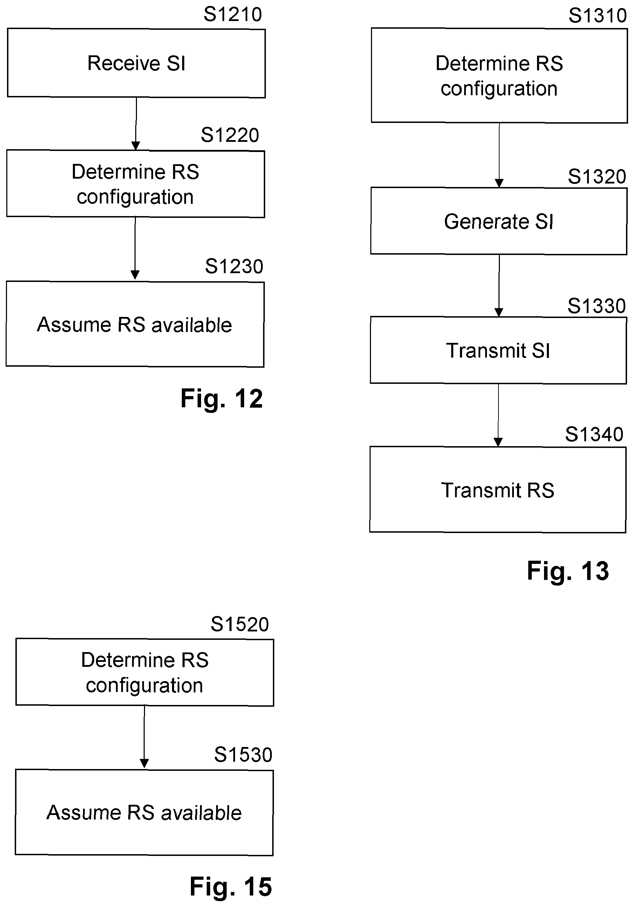

In correspondence with the above-described communication apparatus, provided is a wireless communication method to be performed by a communication apparatus such as a user equipment, which is shown in Fig. 12. The method includes receiving (step S1210) system information indicating a RS configuration. For instance, the SI is received from a base station 910. The method further includes determining (step S1220) the RS configuration based on the received SI, and assuming (step S1230) the RS available in accordance with the determined RS configuration.

Moreover, in correspondence with the above-described base station 910, the present disclosure provides a wireless communication method for a base station illustrated in **Fig. 13****.** The method includes a step S1310 of determining or generating a RS configuration, and a step S1320 of generating system information including or indicating the RS configuration. The method further includes transmitting, step S1330, the system information. For instance, the SI is transmitted to a communication apparatus to be received in step S1210 of the corresponding method for the communication apparatus. The method for the base station further includes a step S1340 of transmitting reference signals in accordance with the determined RS configuration.

Any embodiments and examples of the present disclosure are understood to refer to and be applicable to each of the communication apparatus 960, the base station 910, and the corresponding methods for a communication apparatus and a base station.

For instance, the system information, which includes or indicates the RS configuration, is a system information block (SIB) or a master information block (MIB).

For instance, the reference signals, which are configured by the RS configuration, include at least one of tracking reference signals (TRS) and channel state information reference signals (CSI-RS).

For instance, the RS configuration includes at least one of sequence generation (e.g. a configuration of one or more parameters to generate a sequence of RS values, or a row index of a table defining all the possible RS values), resource mapping (e.g. mapping of RS onto resources in frequency domain, such as Physical Resource Blocks (PRBs) or bandwidth parts and onto resources in time domain such as frames, subframes, slots (or TTIs), and symbols), and transmission timing.

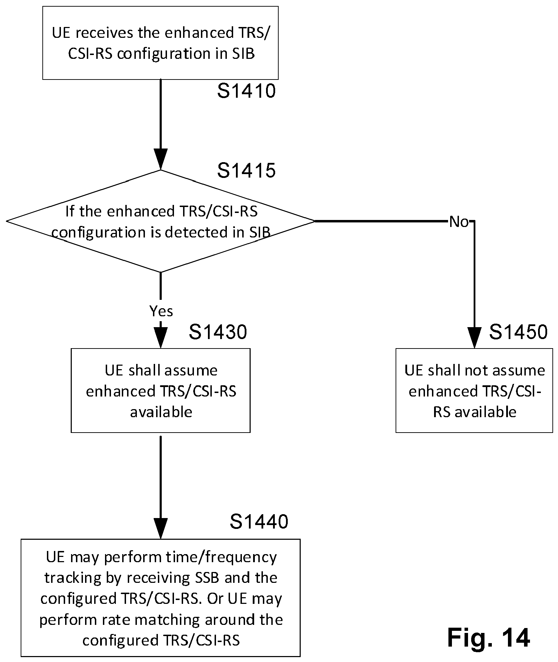

In accordance with some exemplary embodiments, a UE 960 is expected to receive a RS configuration, such as a TRS/CSI-RS configuration, which is transmitted or broadcasted by the base station 910 in the SIB. This is shown in **Fig. 14****,** which gives an example of the UE method shown in Fig. 12, as step S1410 (corresponding to step S1210 in Fig. 12).

If the UE 960 receives a SIB, and a TRS/CSI configuration is not detected in the received SIB in step S1415, the UE shall not assume TRS/CSI RS available, and shall not consider the TRS/CSI RS in the processing of received signals (step S1450 in Fig. 14).

However, if the UE detects a TRS/CSI configuration in the SIB in step 1415, the UE assumes the TRS and/or CSI-RS available in accordance with the configuration indicated by the SIB (step 1430 corresponding to S1230). E.g., as will be described in more detail, the UE may assume the RS available before a paging occasion or before a SIB.

When assuming the RS available as per the configuration, the UE may receive the RS in accordance with the configuration.

For instance, the UE may receive data, which is multiplexed in a physical (e.g. time and frequency) resource, and perform rate matching of the received data in accordance with the determined RS configuration.

For instance, the communication system may be NR, and the UE 960 may be a UE belonging to Release 17 or any later release. In this example, the base station 910 includes a configuration for UEs of Rel. 17 and onwards in the SIB (or MIB). The UE 960 may perform rate matching for all potential PDSCH received by all UEs of Rel. 17 and onwards. E.g., any UE of Rel. 17 and onwards performs rate matching of any received PDSCH taking into account the presence of the RS as per the configuration.

Also, the UE 960 may perform tracking or synchronization tracking including at least one of time tracking, frequency tracking, and beam tracking in accordance with the configured RS configuration.

For instance, the UE 960 receives a synchronization source block (SSB), and performs at least one of time tracking, frequency tracking, and beam tracking based on the received SSB and on the received RS.

E.g., as illustrated by step S1440 of Fig. 14, the UE 960 may perform time, frequency, and/or beam tracking by receiving the SSB as well as the configured TRS/CSI/RS, and/or perform rate matching of received data around the configured TRS/CSI RS, e.g. by taking into account the resource mapping and/or transmission timing indicated by the RS configuration.

For instance, the UE 960 may perform beam tracking by receiving the configured TRS/CSI-RS in a wireless system implementing multi-beam operation, if the configuration includes a configuration of Transmission Configuration Indicator (TCI) states, or is a configuration with TCI state.

In some embodiments, a control resource set (CORESET) for paging and the RS are quasi-co-located (QCLed). E.g., if the TCI state is configured for a CORESET for paging (or "paging CORESET"), the UE 960 (or UE circuitry 980) assumes that the TRS/CSI-RS and the paging CORESET are QCLed. The paging CORESET is a set of resource including the paging DCI. For instance, the paging CORESET can be transmitted in different OFDM symbols within a slot or TTI. Quasi-co-location of two signals means that the UE shall assume transmission parameters for the two signals, including for instance Doppler shift, Doppler spread, average delay, and delay spread, to be similar.

By allowing for time/frequency tracking and beam tracking based on a RS configuration and possible the SSB rather than relying on the SSB alone, the present disclosure may facilitate time/frequency tracking and beam tracking, e.g. if additional TRS/CSI-RS are provided after a long sleeping time (e.g. of a UE in IDLE or INACTIVE mode) or if there is a large gap between SSB bursts. Moreover, a tracking may be performed with a greater degree of accuracy if RS are used rather than the SSB alone, depending on the timing and resources onto which the RS are mapped.

In the above disclosure, embodiments have been described where RS are configured per system information. However, the present disclosure also provides embodiments where a timing for RS transmission is configured to be associated with the timing of other signals. For instance, the UE may be expected to receive TRS/CSI-RS in occasions, which are associated (e.g. have a time relationship with) the UE's paging occasion (PO) and/or paging frame (PF). A PO is a set of paging PDCCH monitoring occasions (occasions that shall be monitored for the paging DCI of the paging PDCCH), each of which corresponds to one transmitted beam in multi-beam operation.

Such configuration of the transmission timing for RS may be performed in combination with the above-described embodiments where the RS configuration is provided within system information. However, the present disclosure is not limited thereto, and the transmission timing may also be a UE reported capability, configured otherwise, e.g. per RRC parameters. Alternatively, the transmission timing may be a fixed or default value (e.g., defined in a standard).

In some embodiments, the UE circuitry 980, in operation, determines a time distance at which a time window including reference signals starts before a paging occasion, a paging frame, or a SIB for the communication apparatus, and the UE transceiver 970, in operation, assumes the RS available within the time window.

For instance, the RS configuration of the transmission timing includes a time distance at which at which a time window including the RS starts before a paging occasion, a paging frame, or a system information block for the communication apparatus.

Accordingly, although the starting location or starting boundary of the time window for RS may be configured by system information, this is not required as it may also, for example, be reported by a UE, configured as a RRC parameter, or fixed. This is shown by the dashed lines in Fig. 10 and in **Fig. 15****,** which shows steps S1520 and S1530 corresponding to steps S1220 and S1230, but does not show any step corresponding to step S1210.

For instance, the TRS/CSI-RS time domain location is a time window starting X frames, subframes, slots/TTIs or symbols before the PO/PF. E.g. X may be a number of TTIs (e.g. slots), a number of symbols, or a combination of any of frames, subframes, TTIs/slots and symbols. However, the TRS/CSI-RS time domain location may also be a time window starting X TTIs/slots or symbols before a SIB.

The UE then may assume TRS/CSI-RS available in the time window before the SIB or before paging frame/occasion, and perform time/frequency tracking by receiving the TRS/CSI-RS and optionally the SSB, and/or perform rate matching for PDCCHs as described above, assuming the RS to be multiplexed with the data of the PDCCHs.

Also, like in the above description, the UE may perform beam tracking by receiving the configured TRS/CSI-RS, e.g. if the configuration includes a configuration of a TCI state is a configuration with TCI state. If the TCI state is configured for a paging CORESET, the UE may assume that the TRS/CSI-RS and the paging are QCLed.

By configuring and transmitting RS in a time window before a paging occasion, the UE may facilitate synchronization tracking, in particular with respect to tracking that relies on the SSB, and may further facilitate performing paging, e.g. the safe transmission and reception of the paging DCI and/or message in a reliable and robust manner, e.g. in idle or inactive mode.

For instance, the transmission timing (e.g. at least one of a time domain location such as the above-described time window and a RS density) is determined based on at least one of the following parameters:
- a discontinuous reception, DRX, cycle T of the communication apparatus;
- a number of N paging frames in the DRX cycle (e.g. a total number of paging frames in the DRX cycle);
- a number of Ns paging occasions for a paging frame (e.g. a total number of paging occasions in a paging frame or a number of paging occasions per beam);
- an offset used for the determination of a paging frame (e.g. a parameter PF_offset); and
- an identifier of the UE corresponding to a temporary network subscriber identity (e.g. shortened temporary network subscriber identity 5G-S-TMSI) of the communication apparatus. E.g., the timing for the RS may be determined based on the value of 5G-S-TMSI mod 1024.
The TRS/CSI-RS time domain location and/or density may be calculated by the UE circuitry 980 and the base station circuitry 930 based on at least one of the above-listed parameters. For instance, the calculation function used for this calculation may be a linear function.

From a point of view of an individual UE, a required RS density, e.g. a density of TRS/CSI-RS required for performing channel state measurements or synchronization based on the RS, may depend on the UE's mobility status, channel conditions, and traffic arrival rate (e.g. the data packet arrival rate from the application layer and driven by a service). Moreover, UE types with reduced UE capability may also be considered to have different requirements of TRS/CSI-RS density.

In some embodiments, the UE circuitry 980 determines, based on the received RS configuration, a RS density at which RS are transmitted in a cell, and determines or decides, based the determined RS density and on the at least one of UE's capability, mobility status, channel conditions, and traffic arrival rate, whether or not to perform at least one of camping to the cell, monitoring paging (e.g. monitoring a paging occasion), or accessing the cell.

Herein, "camping" on a cell or to a cell includes starting to monitor the paging, reading the SIBs from the cell, and performing a measurement using the RS from the cell. "Accessing the cell" refers to a step, which may be performed further in addition to camping, of launching random access for some reason. For instance, such a reason may include detected paging for this UE, having data to transmit from an upper/higher layer, and/or updating the tracking area.

The UE may be expected to receive broadcast information (e.g. the system information) which contains the TRS/CSI-RS configuration and/or a minimum requirement of a TRS/CSI-RS density from the base station or gNB serving the cell which is supported by the network, base station, or cell.The UE then may decide or determine, e.g. by comparing the required or network supported RS density with the UE capability or with a RS density corresponding to the UE capability or other parameters such as mobility status, channel conditions or traffic arrival rate, whether the UE is allowed to get or capable of getting access to the cell.

RS density means how often the RE (resource element) carrying the RS appears in the time and frequency domain resource grid in the RS pattern. For instance, the TRS/CSI-RS are configured with a resource of every 2 OFDM symbols in one TTI (e.g. slot) or two subsequent TTIs every 5 TTIs, and/or every 3 (or e.g. 2, 4 or some greater number) subcarriers in Each PRB. Alternatively, the number of symbols between symbols with RS may differ within a TTI.

By providing embodiments where a UE decide whether or not it should connect to a cell or receive paging of the cell, the present disclosure facilitates efficient operation within the cell by excluding unsuitable UEs from performing communication in this cell, and by preventing a UE from facing issues of poor synchronization, reception of paging and other signals, channel estimation or other operations in view of a RS density requirement it cannot meet.

The present disclosure applies to UEs operating in each mode out of idle mode, inactive mode, and connected mode. For instance, by providing the above-described RS configuration in system information, it is made available to UEs in idle mode or inactive mode. Furthermore, by specifying a timing or a time window for receiving RS dependent on a paging occasion, paging frame, or SIB, possibly close to or adjacent of the paging frame/occasion or system information, the idle or inactive UE may save power by reducing the time in which it is awake or by avoiding additional power ramping caused by additional waking up /going to sleep for the RS reception.

Furthermore, in accordance with this disclosure, the UE may, in RRC_CONNECTED mode, report its UE capability or provide assistance information regarding the TRS/CSI-RS density, and/or the support of QCL of the RS with an SSB index and/or TCI state. The UE may also report a QCL source, e.g. and SSB index (or beam index), in terms of a TCI state.

In some embodiments, the UE 960 transmits a report on at least one of a capability of the UE and a required or suggested RS density. For example, the required or suggested RS density is determined based on at least one of a UE type, UE capability, a mobility status and a traffic situation (e.g. the above mentioned traffic arrival rate) of the UE. For instance, the report is transmitted in a MAC CE (control element) or a RRC message.

For instance the UE 960 may report a required TRS/CSI-RS density as a capability, or report an indication of the capability of the UE, from which the base station may then determine the UE's required density. The capability or required density may be associated with the UE type, e.g. a UE type with reduced capability, such as an industry wireless sensor, a surveillance camera, or a wearable usable in one or more of the usage scenarios eMBB, mMTC, and URLLC..

However, the UE 960 may for instance also report an assistance information including a suggestion for a TRS/CSI-RS density or a suggested RS density. For instance, the suggested value may depend on the UE implementation and may depend and take into account one or more of e.g. the UE's traffic situation, the UE's mobility status, capability and hardware performance such as an accuracy of the UE's clock.

Based on the capability or value of the required/suggested density reported by the UE, the gNB or base station 910 may decide the RS configuration, e.g. the configuration of the TRS/CSI-RS for the reporting UE, e.g. by implementation.

The present disclosure can be realized by software, hardware, or software in cooperation with hardware. Each functional block used in the description of each embodiment described above can be partly or entirely realized by an LSI (large scale integration) such as an integrated circuit (IC), and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Provided is a communication apparatus for use in wireless communication, comprising a transceiver which, in operation, receives system information indicating a reference signal, RS, configuration, and circuitry, which, in operation, determines the RS configuration based on the received system information, wherein the transceiver, in operation, assumes RS available in accordance with the determined RS configuration.

In some embodiments, the transceiver, in operation, receives data in a physical resource multiplexed with the RS, and the circuitry, in operation performs rate matching of the received data in accordance with the determined RS configuration.

For instance, the circuitry, in operation, performs at least one of time tracking, frequency tracking, and beam tracking based on the received RS.

For example, the transceiver, in operation, receives a synchronization signal block, SSB, and the circuitry, in operation, performs at least one of time tracking, frequency tracking, and beam tracking based on the received SSB and on the received RS.

In some embodiments, the circuitry, in operation, determines, based on the RS configuration, a RS density at which RS are transmitted in a cell, and determines, based on the RS density and a capability of the communication apparatus, whether or not to perform at least one of camping to the cell, monitoring paging, or accessing the cell.

In some embodiments, the transceiver, in operation, transmits a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for the communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a communication apparatus for use in wireless communication, comprising circuitry, which, in operation, determines a time distance at which a time window including reference signals, RS, starts before a paging occasion, a paging frame, or a system information block for the communication apparatus, and a transceiver which, in operation, assumes the RS available within the time window.

In some embodiments, the transceiver, in operation, receives data in a physical resource multiplexed with the RS, and the circuitry, in operation performs, rate matching of the received data in accordance with the RS assumed to be available in the time window.

For instance, the circuitry, in operation, performs at least one of time tracking, frequency tracking, and beam tracking based on the received RS.

For example, the transceiver, in operation, receives a synchronization signal block, SSB, and the circuitry, in operation, performs at least one of time tracking, frequency tracking, and beam tracking based on the received SSB and on the received RS.

In some embodiments, the circuitry, in operation, determines, based on an RS configuration, a RS density within the time window at which RS are transmitted in a cell, and determines, based on the RS density and a capability of the communication apparatus, whether or not to perform at least one of camping to the cell, monitoring paging, or accessing the cell.

In some embodiments, the transceiver, in operation, transmits a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a base station for use in wireless communication, comprising circuitry which, in operation, determines a reference signal, RS, configuration and generates system information including the RS configuration, and a transceiver which, in operation, transmits the system information and transmits RS in accordance with the determined RS configuration.

In some embodiments, the circuitry, in operation, performs rate matching of data in accordance with the determined RS configuration, and the transceiver, in operation, transmits the rate-matched data in a physical resource multiplexed with the RS.

For instance, the transceiver, in operation, transmits the RS to a communication apparatus, which is to perform at least one of time tracking, frequency tracking, and beam tracking based on the RS received from the base station.

For example, the transceiver, in operation, transmits a synchronization resource block, SSB, to the communication apparatus, which is to perform at least one of time tracking, frequency tracking, and beam tracking based on the received SSB and on the RS received from the base station.

In some embodiments, the transceiver, in operation, receives a report on at least one of a capability of a communication apparatus of the communication apparatus transmitting the report and a required or suggested RS density and the circuitry determines the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for a communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a base station for use in wireless communication, comprising circuitry, which, in operation, determines a time distance at which a time window including reference signals, RS, starts before a paging occasion, a paging frame, or a system information block, and a transceiver, which, in operation, transmits.

In some embodiments, the circuitry, in operation, performs rate matching of data in accordance with a determined RS configuration, and the transceiver, in operation, transmits the rate-matched data in a physical resource multiplexed with the RS in accordance with the RS configuration within the time window.

For instance, the transceiver, in operation, transmits the RS to a communication apparatus, which is to perform at least one of time tracking, frequency tracking, and beam tracking based on the RS received from the base station.

For example, the transceiver, in operation, transmits a synchronization resource block, SSB, to the communication apparatus, which is to perform at least one of time tracking, frequency tracking, and beam tracking based on the received SSB and on the RS received from the base station.

In some embodiments, the transceiver, in operation, receives a report on at least one of a capability of a communication apparatus of the communication apparatus transmitting the report and a required or suggested RS density and the circuitry determines the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a method for wireless communication including the following steps to be performed by a communication apparatus: receiving system information indicating a reference signal, RS, configuration, determining the RS configuration based on the received system information, and assuming RS available in accordance with the determined RS configuration.

In some embodiments, the method includes receiving data in a physical resource multiplexed with the RS, and performing rate matching of the received data in accordance with the determined RS configuration.

For instance, the method includes performing at least one of time tracking, frequency tracking, and beam tracking based on the received RS.

For example, the method includes receiving a synchronization signal block, SSB, and performing at least one of time tracking, frequency tracking, and beam tracking based on the received SSB and on the received RS.

In some embodiments, the method includes determining, based on the RS configuration, a RS density at which RS are transmitted in a cell, and determining, based on the RS density and a capability of the communication apparatus, whether or not to perform at least one of camping to the cell, monitoring paging, or accessing the cell.

In some embodiments, the method includes transmitting a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for the communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a method for wireless communication including the following steps to be performed by a communication apparatus: determining a time distance at which a time window including reference signals, RS, starts before a paging occasion, a paging frame, or a system information block for the communication apparatus, and assuming the RS available within the time window.

In some embodiments, the method includes receiving data in a physical resource multiplexed with the RS, and performing rate matching of the received data in accordance with the RS assumed to be available in the time window.

For instance, the method includes performing at least one of time tracking, frequency tracking, and beam tracking based on the received RS.

For example, the method includes receiving a synchronization signal block, SSB, and the circuitry, in operation, performs at least one of time tracking, frequency tracking, and beam tracking based on the received SSB and on the received RS.

In some embodiments, the method includes determining, based on an RS configuration, a RS density within the time window at which RS are transmitted in a cell, and determines, based on the RS density and a capability of the communication apparatus, whether or not to perform at least one of camping to the cell, monitoring paging, or accessing the cell.

In some embodiments, the method includes transmitting a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a method for wireless communication including the following steps to be performed by a base station: determining a reference signal, RS, configuration, generating system information including the RS configuration, transmitting the system information, and transmitting RS in accordance with the determined RS configuration.

In some embodiments, the method includes performing rate matching of data in accordance with the determined RS configuration, and transmitting the rate-matched data in a physical resource multiplexed with the RS.

For instance, the method includes transmitting the RS to a communication apparatus, which is to perform at least one of time tracking, frequency tracking, and beam tracking based on the RS received from the base station.

For example, the method includes transmitting a synchronization resource block, SSB, to the communication apparatus, which is to perform at least one of time tracking, frequency tracking, and beam tracking based on the received SSB and on the RS received from the base station.

In some embodiments, the method includes receiving a report on at least one of a capability of a communication apparatus of the communication apparatus transmitting the report and a required or suggested RS density, and determining the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for a communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is a method for wireless communication including the following steps to be performed by a base station: determining a time distance at which a time window including reference signals, RS, starts before a paging occasion, a paging frame, or a system information block, and transmitting the RS within the time window.

In some embodiments, the method includes performing rate matching of data in accordance with a determined RS configuration, and transmitting the rate-matched data in a physical resource multiplexed with the RS in accordance with the RS configuration within the time window.

For instance, the method includes transmitting the RS to a communication apparatus, which is to perform at least one of time tracking, frequency tracking, and beam tracking based on the RS received from the base station.

For example, the method includes transmitting a synchronization resource block, SSB, to the communication apparatus, which is to perform at least one of time tracking, frequency tracking, and beam tracking based on the received SSB and on the RS received from the base station.

In some embodiments, the method includes receiving a report on at least one of a capability of a communication apparatus of the communication apparatus transmitting the report and a required or suggested RS density and determining the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is an integrated circuit, which, in operation, controls a communication device for use in wireless communication to perform: receiving system information indicating a reference signal, RS, configuration, determining the RS configuration based on the received system information, and assuming RS available in accordance with the determined RS configuration.

In some embodiments, the integrated circuit controls the communication apparatus to receive data in a physical resource multiplexed with the RS, and to perform rate matching of the received data in accordance with the determined RS configuration.

For instance, the integrated circuit controls the communication apparatus to perform at least one of time tracking, frequency tracking, and beam tracking based on the received RS.

For example, the integrated circuit controls the communication apparatus to receive a synchronization signal block, SSB, and to perform at least one of time tracking, frequency tracking, and beam tracking based on the received SSB and on the received RS.

For example, the integrated circuit controls the communication apparatus to determine, based on the RS configuration, a RS density at which RS are transmitted in a cell, and determine, based on the RS density and a capability of the communication apparatus, whether or not to perform at least one of camping to the cell, monitoring paging, or accessing the cell.

In some embodiments, the integrated circuit controls the communication apparatus to transmit a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for the communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is an integrated circuit, which, in operation, controls a communication device for use in wireless communication to perform: determining a time distance at which a time window including reference signals, RS, starts before a paging occasion, a paging frame, or a system information block for the communication apparatus, and assuming the RS available within the time window.

In some embodiments, the integrated circuit controls the communication device to receive receiving data in a physical resource multiplexed with the RS, and to perform rate matching of the received data in accordance with the RS assumed to be available in the time window.

For instance, the integrated circuit controls the communication device to perform at least one of time tracking, frequency tracking, and beam tracking based on the received RS.

For instance, the integrated circuit controls the communication device to perform at least one of time tracking, frequency tracking, and beam tracking based on the received SSB and on the received RS.

In some embodiments, the integrated circuit controls the communication device to determine, based on an RS configuration, a RS density within the time window at which RS are transmitted in a cell, and to determine, based on the RS density and a capability of the communication apparatus, whether or not to perform at least one of camping to the cell, monitoring paging, or accessing the cell.

In some embodiments, the integrated circuit controls the communication device to transmit a report on at least one of a capability of the communication apparatus and a required or suggested RS density.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is an integrated circuit, which, in operation, controls a base station for use in wireless communication to perform: determining a reference signal, RS, configuration, generating system information including the RS configuration, transmitting the system information, and transmitting RS in accordance with the determined RS configuration.

In some embodiments, the integrated circuit controls the base station to perform rate matching of data in accordance with the determined RS configuration, and to transmit the rate-matched data in a physical resource multiplexed with the RS.

For instance, the integrated circuit controls the base station to transmit the RS to a communication apparatus, which is to perform at least one of time tracking, frequency tracking, and beam tracking based on the RS received from the base station.

For example, the integrated circuit controls the base station to transmit a synchronization resource block, SSB, to the communication apparatus, which is to perform at least one of time tracking, frequency tracking, and beam tracking based on the received SSB and on the RS received from the base station.

In some embodiments, the integrated circuit controls the base station to perform receiving a report on at least one of a capability of a communication apparatus of the communication apparatus transmitting the report and a required or suggested RS density, and determining the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For instance, the transmission timing includes a time distance at which a time window including the RS starts before a paging occasion, a paging frame, or a system information block for a communication apparatus.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Further provided is an integrated circuit, which, in operation, controls a base station for use in wireless communication to perform: determining a time distance at which a time window including reference signals, RS, starts before a paging occasion, a paging frame, or a system information block, and transmitting the RS within the time window.

In some embodiments, the integrated circuit controls the base station to perform rate matching of data in accordance with a determined RS configuration, and to transmit the rate-matched data in a physical resource multiplexed with the RS in accordance with the RS configuration within the time window.

For instance, the integrated circuit controls the base station to transmit the RS to a communication apparatus, which is to perform at least one of time tracking, frequency tracking, and beam tracking based on the RS received from the base station.

For example, the integrated circuit controls the base station to transmit a synchronization resource block, SSB, to the communication apparatus, which is to perform at least one of time tracking, frequency tracking, and beam tracking based on the received SSB and on the RS received from the base station.

In some embodiments, the integrated circuit controls the base station to receive a report on at least one of a capability of a communication apparatus of the communication apparatus transmitting the report and a required or suggested RS density, and to determine the RS configuration based on the report.

For instance, the required or suggested RS density is determined based on at least one of a type of the communication apparatus, a capability of the communication apparatus, a mobility status of the communication apparatus, and a traffic situation.

For example, the RS configuration includes at least one of an RS sequence generation, a resource for mapping RS, and a transmission timing for RS.

For example, the transmission timing for RS is determined based on at least one of a discontinuous reception, DRX, cycle of the communication apparatus, a number of paging frames in the DRX cycle, a number of paging occasions for a paging frame, an offset used for the determination of a paging frame, and a temporary network subscriber identity of the communication apparatus.

In some embodiments, the RS include at least one of tracking reference signals, TRS, and channel state information reference signal, CSI-RS.

Summarizing, provided are a communication apparatus and a base station for use in wireless communication, a method for a communication apparatus and a method for a base station. The communication apparatus comprises a communication apparatus for use in wireless communication comprising a transceiver which, in operation, receives system information indicating a reference signal, RS, configuration and circuitry which, in operation, determines the RS configuration based on the received system information, wherein the transceiver, in operation, assumes RS available in accordance with the determined RS configuration.

## Claims

1. A communication apparatus for use in wireless communication, comprising:
a transceiver which, in operation, receives system information indicating a reference signal, RS, configuration; and
circuitry which, in operation, determines the RS configuration based on the received system information,
wherein the transceiver, in operation, assumes RS available in accordance with the determined RS configuration.

2. The communication apparatus according to claim 1, wherein
the transceiver, in operation, receives data in a physical resource multiplexed with the RS, and
the circuitry, in operation performs, rate matching of the received data in accordance with the determined RS configuration.

3. The communication apparatus according to claim 1 or 2, wherein the circuitry, in operation, performs at least one of time tracking, frequency tracking, and beam tracking based on the received RS.

4. The communication apparatus according to claim 3, wherein the transceiver, in operation, receives a synchronization signal block, SSB, and
the circuitry, in operation, performs at least one of time tracking, frequency tracking, and beam tracking based on the received SSB and on the received RS.

5. The communication apparatus according to any of claims 1 to 4, wherein
the circuitry, in operation, determines, based on the RS configuration, a RS density at which RS are transmitted in a cell, and determines, based on the RS density and a capability of the communication apparatus, whether or not to perform at least one of camping to the cell, monitoring paging, or accessing the cell.

6. The communication apparatus according to any of claims 1 to 4, wherein the transceiver, in operation, transmits a report on at least one of a capability of the communication apparatus and a required or suggested RS density.

7. The communication apparatus according to claim 6, wherein the required or suggested RS density is determined based on at least one of a type of the communication apparatus, a capability of the communication apparatus, a mobility status of the communication apparatus, and a traffic situation.

8. The communication apparatus according to any of claims 1 to 7, wherein the RS configuration includes at least one of an RS sequence generation, a resource for mapping RS, and a transmission timing for RS.

9. The communication apparatus according to claim 8, wherein the transmission timing includes a time distance at which a time window including the RS starts before a paging occasion, a paging frame, or a system information block for the communication apparatus.

10. The communication apparatus according to claim 8 or 9, wherein the transmission timing for RS is determined based on at least one of:
• a discontinuous reception, DRX, cycle of the communication apparatus;
• a number of paging frames in the DRX cycle;
• a number of paging occasions for a paging frame;
• an offset used for the determination of a paging frame; and
• a temporary network subscriber identity of the communication apparatus.

11. A communication apparatus for use in wireless communication, comprising:
circuitry, which, in operation, determines a time distance at which a time window including reference signals starts before a paging occasion, a paging frame, or a system information block for the communication apparatus, and
a transceiver which, in operation, assumes the RS available within the time window.

12. The communication apparatus according to any of claims 1 to 11, the RS including at least one of tracking reference signals, TRS, and channel state information reference signal, CSI-RS.

13. A base station for use in wireless communication, comprising:
circuitry which, in operation, determines a reference signal, RS, configuration and generates system information including the RS configuration; and
a transceiver which, in operation, transmits the system information and transmits RS in accordance with the determined RS configuration.

14. A method for wireless communication including the following steps to be performed by a communication apparatus:
receiving system information indicating a reference signal, RS, configuration;
determining the RS configuration based on the received system information; and
assuming RS available in accordance with the determined RS configuration.

15. A method for wireless communication including the following steps to be performed by a base station:
determining a reference signal, RS, configuration;
generating system information including the RS configuration;
transmitting the system information; and
transmitting RS in accordance with the determined RS configuration.
